# EUROPÄISCHE PATENTSCHRIFT

(11) **EP 1 623 537 B1**
(45) Veröffentlichungstag und Bekanntmachung des Hinweises auf die Patenterteilung: **21.10.2009**
(21) Anmeldenummer: 04725065.9
(22) Anmeldetag: 01.04.2004
(51) Int. Cl.: H04L 12/56

(54) **VERFAHREN FUER ZUFALLSZUGRIFFE IN EINEM LOKALEN NETZ**
METHOD FOR RANDOM ACCESSES IN A LOCAL NETWORK
PROCEDE DE REGULATION D'ACCES ALEATOIRES DANS UN RESEAU LOCAL

(30) Priorität: 12.05.2003 EP 03010625
(43) Veröffentlichungstag der Anmeldung: 08.02.2006
(73) Patentinhaber: Nokia Siemens Networks GmbH & Co. KG, 81541 München (DE)
(72) Erfinder: LI, Hui, 80937 München (DE); WIJAYA, Harianto, Kel. Pasar Baru 10710 Jakarta (ID); ZIRWAS, Wolfgang, 82194 Gröbenzell (DE)
(86) Internationale Anmeldenummer: PCT/EP2004/050410
(87) Internationale Veröffentlichungsnummer: WO 2004/100462

(56) Entgegenhaltungen:
- EP-A- 1 271 850
- WO-A-01/69869
- WO-A-03/005643
- WO-A-03/026221
- US-A1- 2002 089 957

## Beschreibung

Die Erfindung betrifft ein Verfahren zur Regelung von Zufallzugriffen in einem funkgestützten lokalen Netz nach dem Oberbegriff des Anspruchs 1.

Unter lokalen Netzen (LANs, Local Area Networks) versteht man in der Regel Kommunikationsnetze mit einer Ausdehnung von einigen 10 Metern bis hin zu 10 Kilometern. Funkgestützte lokale Netze werden als WLANs (Wireless LANs) bezeichnet. Die Mehrheit der LANs dehnt sich jedoch nur über einige hundert Meter innerhalb von Gebäuden oder einer Organisation aus (Inhouse-Netze).

WLANs ermöglichen die Kommunikation zwischen einer drahtgebundenen Netzinfrastruktur und mobilen Rechnern oder anderen teilnehmerseitigen Stationen. Oft werden WLANs als Ergänzung für kabelgestützte LANs in bestimmten Arbeitsumgebungen eingesetzt. In der Regel umfassen WLANs verschiedene Zugangspunkte (Access Points, APs), die über ein drahtgestütztes LAN miteinander verbunden sind und bei denen der Datentransport von einem mobilen Sender über eine Funkstrecke zum AP erfolgt und dann über das LAN weitergeleitet wird. Die von den WLANs abgedeckten Zellen sind mit einem Durchmesser von bis zu einigen hundert Metern im Vergleich zu üblichen Mobilfunkzellen so klein, dass sie Mikrozellen genannt werden.

Beispiele verschiedener Standards für WLANs sind HiperLAN, DECT, IEEE 802.11, Bluetooth und WATM. Als lokale funkgestützte Netze scheinen sich jedoch derzeit vor allem in den USA und Europa fast ausschließlich Produkte auf Basis der IEEE 802.11-Familie durchzusetzen, wobei entsprechende Ethernet-Anschlüsse bereits in vielen Computern und tragbaren Computern (z.B. Laptop, Notebook, PDA) standardmäßig bereitgestellt werden. Die gemäß IEEE 802.11b-Standard definierte Funkschnittstelle zum Zugriff auf lokale Netze entspricht funktional einem verdrahteten Anschluss an lokale Netze (LANs), die sich heutzutage zum Standard in Büros entwickelt haben. Schnittstellen-Karten für funkgestützte Zugriffe auf lokale Netze, die auch als NICs (Network Interface Cards) bezeichnet werden, sind aus architektonischer Sicht in der Regel wie standardisierte Ethernet-Karten gefertigt und mit den heutigen Betriebssystemen per sogenanntem Plug & Play einzusetzen. Tragbare Computer sind mit entsprechenden Schnittstellenkarten problemlos nachrüstbar, sofern sie nicht bereits ab Werk mit einem integrierten Anschluss für einen verdrahteten oder funkgestützten Zugriff auf lokale Netze ausgeliefert werden. Bei den nächsten Betriebssystemgenerationen (z. B. Windows XP von Microsoft), wird eine voll integrierte Unterstützung von lokalen Funknetzen (WLANs) bereitgestellt.

Allgemein wird für funkgestützte WLANs der nicht lizenzierte Frequenzbereich um 2,4 GHz genutzt. Datenübertragungsraten liegen bei bis zu 11 Mbit/s. Künftige WLANs könnten im 5 GHz Bereich betrieben werden und Datenraten von über 50 Mbit/s erreichen. Mit Datenraten von derzeit 11 Mbit/s und zukünftig 50 Mbit/s stehen damit den Teilnehmern der WLANs Datenraten zur Verfügung, die erheblich höher liegen, als die Datenraten, die von der nächsten, dritten Mobilfunkgeneration (z.B. UMTS) angeboten werden können. Damit ist für die Übertragung von großen Datenmengen, insbesondere in Verbindung mit Internetzugriffen der Zugriff auf funkgestützte lokale Netze (WLANs) für hochbitratige Verbindungen zu bevorzugen.

Der 1999 vorgestellte Standard für funkgestützte lokale Netze IEEE 802.11 unterstützt sowohl die Vergabe von Funkressourcen an Funkstationen für die Versendung von Informationen mit Wettbewerb, als auch eine Vergabe ohne Wettbewerb. Die Vergabe von Funkressourcen ohne Wettbewerb wird auch in zellularen WCDMA-Systemen angewandt. Das Dokument US 2002/0089957 A1 beschreibt hierzu ein Verfahren, bei welchem die Basisstation den Mobilstationen mitteilt, zu welchen Zeiten sie einen Code auf dem Random Access Kanal versenden dürfen, um sich für die Vergabe von Funkressourcen durch die Basisstation bewerben zu können. Die Vergabe von Funkressourcen ohne Wettbewerb bedeutet, dass ein Zugangspunkt Funkressourcen an Funkstationen zuweist, während bei der Vergabe mit Wettbewerb die Funkstationen einen Zufallszugriff auf die Funkressourcen betreiben. Jedoch werden im Rahmen dieses Standards die verschiedenen Nachfragen nach Ressourcen für die Versendung von Informationen unabhängig davon, um welche Art von Anwendung es sich handelt, behandelt. Somit ist der IEEE 802.11 Standard nicht in der Lage, eine Dienstgüte (QoS, Quality of Service) zu gewährleisten. Um u.a. diesen Mangel zu beheben, wird im Rahmen des zukünftigen IEEE 802.11e Standards eine Weiterentwicklung der Schicht der Medienzugriffskontrolle (MAC layer, Medium Access Control) vorgeschlagen. In dem Dokument WO 03/026221 A1 werden die Medienzugriffsverfahren gemäß IEEE 802.11 erläutert. Im folgenden werden einige Grundzüge des zukünftigen IEEE 802.11e Standards beschrieben:
- Das Zeitintervall zwischen den Leuchtfeuersignalen (beacons) der Zugangspunkte ist fixiert. Eine Funkstation ist somit nicht mehr in der Lage, den Zugangspunkt zu einer verspäteten Versendung des Leuchtfeuersignals zu zwingen.
- Unter Daten einer Dienstekategorie (Traffic Category, TC) werden Daten der MAC-Schicht mit einer bestimmten Priorität verstanden.
- Ein Zugangspunkt kann Funkressourcen an eine Funkstation zuweisen. Dieser Prozess wird "polling" genannt. Weiterhin kann eine Funkstation per Zufallszugriff Informationen versenden, wobei hierbei EDCF (Enhanced Distributed Coordination Function) zum Einsatz kommt. Dies beruht auf dem CSMA (Carrier Sense Multiple Access) Verfahren, wobei versucht wird, Kollisionen von Funksignalen durch einen Back-off-Mechanismus zu vermeiden. Hierbei stellt eine Funkstation durch Messung fest, ob das Medium, d.h. die Funkressource, belegt ist. Muss eine Belegung des Mediums bejaht werden, wird eine Back-off-zeit berechnet, nach welcher ein Zufallszugriff auf die Funkressourcen gestartet wird. In diese Berechnung gehen Parameter der Dienstekategorie ein.
- Der Zugangspunkt kontrolliert die für einen Zufallszugriff im EDCF Modus maximal zu verwendende Zeitspanne (Transmission Opportunity). Jede Station im Funkabdeckungsbereich des Zugangspunktes kann diesen Wert dem periodisch von dem Zugangspunkt gesendeten Leuchtfeuersignal entnehmen.
- In den Zeitphasen ohne Wettbewerb (wettbewerbsfreie Phasen) kann der Zugangspunkt den Funkstationen durch das polling verschieden lange Zeiträume zur Versendung von Informationen zuweisen.
- Die Funkstationen, welche die von ihnen zu versendenden Informationen nach der TC priorisieren, werden Dienstgütestationen (Quality of Service Stations, QSTA) genannt. Neben ihnen können in dem funkgestützten lokalen Netz auch Funkstationen existieren, welche eine derartige Priorisierung nicht vornehmen.
- Ein Zugangspunkt, welcher die Zuweisung von Funkressourcen an Dienstgütestationen und an andere Stationen, sowie die Regelung bezüglich der Vergabe von Funkressourcen im Wettbewerb durchführt, wird als Hybrid Coordinator, HC, bezeichnet. Jede Dienstgütestation weist die zur Durchführung dieser Aufgaben nötigen Kapazitäten auf.
- Mit dem Begriff der Transmission Opportunity, TXOP, wird zum einen die für einen Zufallszugriff während der Wettbewerbsphase im EDCF Modus maximal zu verwendende Zeitspanne bezeichnet. D.h. im Falle, dass das Medium nach den Regeln des EDCF für eine Funkstation verfügbar ist, kann diese Funkstation die TXOP zur Versendung von Informationen nutzen. Andererseits bezeichnet die TXOP auch diejenige Zeitspanne, welche einer Funkstation zur Versendung von Informationen zur Verfügung steht, nachdem dieser Funkstation Funkressourcen von einem Zugangspunkt zugewiesen wurden. Die Länge der TXOP wird im Hinblick auf die Wettbewerbsphase in dem Leuchtfeuersignal des Zugangspunktes mitgeteilt, im Hinblick auf die wettbewerbsfreie Phase enthält das Signal, welches die Zuweisung von Funkressourcen an eine Funkstation indiziert, Informationen über die Länge der jeweiligen TXOP.

Der Bereich der Funkabdeckung eines WLAN beträgt typischerweise zwischen 50 und 200 Metern. Hält sich eine Funkstation weiter entfernt von einem Zugangspunkt, d.h. außerhalb des Funkabdeckungsbereichs des Zugangspunktes, auf, handelt es sich um eine entfernte Funkstation, welcher kein direkter Funkkontakt zu dem Zugangspunkt möglich ist. Um den Funkabdeckungsbereich eines WLAN zu vergrößern, kann daher eine Überbrückung des Funksignals zwischen einer entfernten Station und einem Zugangspunkt durch Stationen ermöglicht werden, welche sich gleichzeitig in den Funkabdeckungsbereichen des Zugangspunktes und der entfernten Station befinden. Derartige Multi-Hop Konzepte erhöhen die Wirtschaftlichkeit von WLANs, da in diesem Fall die teure Infrastruktur eines WLAN effizienter ausgenutzt werden kann.

Allerdings stellen sich bei der Einbeziehung von entfernten Funkstationen in WLANs auch eine Reihe von Problemen. So besteht die Gefahr, dass entfernte Stationen aufgrund ihrer Zufallszugriffe unerwünschte Störsignale zu Signalen anderer Funkstationen erzeugen, wie z.B. zu den wichtigen Leuchtfeuersignalen. Derartige Effekte gilt es zu vermeiden. Andererseits sollte den entfernten Stationen ein Zufallszugriff im Hinblick auf eine gute Ausnutzung der knappen Funkressourcen möglichst oft ermöglicht werden. Von besonderem Vorteil erweist sich ein geeignetes Wechselspiel zwischen Verbot und Erlaubnis eines Zufallszugriffs.

Der Erfindung liegt daher die Aufgabe zugrunde, ein effizientes Verfahren der eingangs genannten Art zur Regelung von Zufallszugriffen in einem funkgestützten lokalen Netz bei dem Vorliegen von entfernten Funkstationen aufzuzeigen.

Diese Aufgabe wird gelöst durch ein Verfahren mit den Merkmalen des Anspruchs 1.

In dem funkgestützten lokalen Netz weist der mindestens eine Zugangspunkt zeitweilig Funkressourcen für die Versendung von Informationen zu an Funkstationen innerhalb seines Funkabdeckungsbereichs, und zeitweilig betreiben Funkstationen einen Zufallszugriff auf Funkressourcen für die Versendung von Informationen. Erfindungsgemäß sendet die erste Funkstation ein Signal an die mindestens eine entfernte Funkstation, welches Informationen über die Zulässigkeit eines Zufallszugriffs der mindestens einen entfernten Funkstation beinhaltet. Hierbei stellt ein Zufallszugriff einen Zugriff auf Funkressourcen für die Versendung von Informationen ohne Zuweisung von Funkressourcen dar. Das Signal verbietet einen Zufallszugriff der mindestens einen entfernten Funkstation.

Werden einer Funkstation Funkressourcen zugeteilt, oder kann die Funkstation Funkressourcen durch erfolgreichen Zufallszugriff für sich gewinnen, so kann diese Funkstation Funkressourcen an entfernte Funkstationen innerhalb ihres Funkabdeckungsbereichs zuweisen. Die Funkstation kann ihre entfernten Funkstationen auch Zufallszugriffe auf die Funkressourcen betreiben lassen. Vorteilhafterweise erfolgt eine Information der entfernten Funkstationen über die Zulässigkeit eines Zufallszugriffs am Anfang und/oder am Ende einer solchen Zeitspanne, für welche ihre Funkstation Funkressourcen zugeteilt bekam oder per Zufallszugriff für sich gewinnen konnte.

Das erfindungsgemäße Verfahren erlaubt eine flexible Handhabung der Zufallszugriffsrechte von entfernten Funkstationen in einem funkgestützten lokalen Netz. Durch das Verbot eines Zufallszugriffs können unerwünschte Kollisionen von Signalen bzw. Interferenzerscheinungen reduziert werden, durch eine Erlaubnis eines Zufallszugriffs werden die knappen Funkressourcen besser ausgenutzt.

Ausgestaltungen und Weiterbildungen sind Gegenstand der Unteransprüche.

Das Signal kann einen Zufallszugriff der mindestens einen entfernten Funkstation insbesondere für eine bestimmte Zeitspanne verbieten. Ein zeitlich begrenztes oder auch zeitlich unbegrenztes Verbot eines Zufallszugriffs verhindert, dass die jeweiligen entfernten Funkstationen versuchen, einen Zufallszugriff durchzuführen. Somit werden die entfernten Funkstationen "zum Schweigen gebracht", es sei denn, ihnen werden Funkressourcen zugewiesen oder das Verbot wird aufgehoben, oder aber die Zeitspanne des Verbotes läuft ab.

In Weiterbildung der Erfindung beinhaltet das Signal eine Zuweisung von Funkressourcen an eine andere als die mindestens eine entfernte Funkstation, insbesondere an die erste Funkstation. Eine Zuweisung von Funkressourcen an eine Funkstation verhindert, dass andere Funkstationen in dieser Zeitspanne Zufallszugriffe durchführen. Die erste Funkstation kann also z.B. an sich selber oder an eine beliebige Funkstation mit Ausnahme ihrer entfernten Funkstationen Funkressourcen zuweisen, um somit ihren entfernten Funkstationen einen Zufallszugriff zu untersagen. Dieses Signal der Zuweisung von Funkressourcen bedeutet in realiter keine echte Zuweisung von Funkressourcen, da die erste Funkstation gegenüber anderen Funkstationen mit Ausnahme ihrer entfernten Funkstationen in der Regel nicht befugt ist, Funkressourcen zu vergeben. Vielmehr handelt es sich hierbei um ein "Dummy-Signal", welches das Verbot eines Zufallszugriffs für die betroffenen entfernten Funkstationen beinhaltet.

In einer anderen Weiterbildung der Erfindung indiziert das Signal ein Zur-Verfügung-Stehen von Funkressourcen für eine andere als die mindestens eine entfernte Funkstation, insbesondere für die erste Funkstation, nach erfolgreichem Zufallszugriff. Ein erfolgreicher Zufallszugriff einer Funkstation verhindert, dass andere Funkstationen in der für den erfolgreichen Zufallszugriff zur Verfügung stehenden Zeitspanne Zufallszugriffe durchführen. Die erste Funkstation gibt aufgrund des Signals vor, dass sie oder eine beliebige andere Funkstation mit Ausnahme ihrer entfernten Funkstationen einen erfolgreichen Zufallszugriff durchgeführt hat, um somit ihren entfernten Funkstationen einen Zufallszugriff zu untersagen. Auch bei diesem Signal handelt es sich um ein "Dummy-Signal". Z.B. kann das Signal eine Versendung von Informationen an eine andere als die mindestens eine entfernte Funkstation, insbesondere an die erste Funkstation indizieren. Die erste Funkstation kann also vorgeben, nach erfolgreichem Zufallszugriff Informationen an sich selber versenden zu wollen.

In einer anderen Weiterbildung der Erfindung schließlich beinhaltet das Signal eine Festsetzung der für einen Zufallszugriff maximal zu verwendenden Zeitspanne auf den Wert Null. Unter der für einen Zufallszugriff maximal zu verwendenden Zeitspanne wird hier der Wert der Zeitspanne verstanden, welcher einer Funkstation zur Kommunikation zur Verfügung steht, wenn diese einen Zufallszugriff erfolgreich durchgeführt hat. In diese Zeitspanne kann die für das Zufallszugriffssignal verwendete Zeitspanne einbezogen sein oder auch nicht. Vorteilhafterweise handelt es sich bei dem Signal um ein Leuchtfeuersignal. Es kann sich auch um ein einem Leuchtfeuersignal entsprechendes Signal handeln, insofern es die Aufgabe des Signals wie auch die Aufgabe des Leuchtfeuersignals u.a. ist, den Wert der für einen Zufallszugriff maximal zu verwendenden Zeitspanne festzulegen. Nach einem solchen Signal steht den betroffenen entfernten Stationen keine Zeit mehr für einen Zufallszugriff zur Verfügung.

Gemäß einer vorteilhaften Ausgestaltung der Erfindung erlaubt ein weiteres Signal einen Zufallszugriff der mindestens einen entfernten Funkstation. Oftmals ist es sinnvoll, ein solches Signal zur Erlaubnis eines Zufallszugriffs einzusetzen, nachdem zuvor ein zeitlich unbeschränktes Verbot eines Zufallszugriffs ergangen ist, oder aber ein zeitlich beschränktes Verbot vor Ablauf der jeweiligen Zeitspanne aufgehoben werden soll. In diesen Fällen wird das erfindungsgemäße Verfahren somit in verschiedenen Ausgestaltungen angewandt. Günstigerweise wird die Art des Erlaubnis-Signals der Art des Verbots-Signals angepasst.

In einer Weiterbildung der Erfindung indiziert das weitere Signal die Beendigung einer Belegung von Funkressourcen. Die entfernten Funkstationen erkennen an diesem weiteren Signal, dass ein Verbot des Zufallszugriffs aufgrund der Tatsache, dass Funkressourcen aufgrund der Zuweisung von Funkressourcen an andere Funkstationen oder aufgrund eines erfolgreichen Zufallszugriffs durch andere Funkstationen belegt sind, keine Geltung mehr hat, ein Zufallszugriff bis auf weiteres also erlaubt ist.

In einer anderen Weiterbildung der Erfindung beinhaltet das weitere Signal eine Festsetzung der für einen Zufallszugriff maximal zu verwendenden Zeitspanne auf einen Wert größer Null. Diese Art eines Erlaubnis-Signals eignet sich besonders nach einem Verbots-Signal, welches eine Festsetzung der für einen Zufallszugriff maximal zu verwendenden Zeitspanne auf den Wert Null vermittelt hat. Vorteilhafterweise hängt der Wert der für einen Zufallszugriff zu verwendenden Zeitspanne von der Anzahl von entfernten Funkstationen außerhalb des Funkabdeckungsbereichs des mindestens einen Zugangspunktes und gleichzeitig innerhalb des Funkabdeckungsbereichs der ersten Funkstation ab. Dies erlaubt eine effiziente Verteilung von Funkressourcen über das Zufallszugriffsverfahren.

Bei dem weiteren Signal kann es sich insbesondere um ein Leuchtfeuersignal oder um ein einem Leuchtfeuersignal entsprechendes Signal handeln.

Einer Ausgestaltung der Erfindung zufolge beinhaltet das weitere Signal Informationen über ein von allen Funkstationen des funkgestützten lokalen Netzes für einen Zufallszugriff auf Funkressourcen nutzbare Zeitspanne. Diese Zeitspanne steht somit den Funkstationen innerhalb des Funkabdeckungsbereichs des Zugangspunktes und den entfernten Funkstationen außerhalb des Funkabdeckungsbereichs des Zugangspunktes für Zufallszugriffe zur Verfügung. Eine solche Zeitspanne wirkt sich besonders positiv auf die Ausnutzung der Funkressourcen aus. Das weitere Signal indiziert somit eine Zeitspanne, welche die entfernten Funkstationen sicher für Zufallszugriffe nutzen können. Es ist sowohl möglich, dass dies die einzige Zeitspanne für die Zufallszugriffe der entfernten Funkstationen ist, als auch, dass eine oder mehrere weitere Zeitspannen für Zufallszugriffe für alle oder manche entfernte Funkstationen existieren können. Ein entsprechendes Signal zur Anzeige einer Zeitspanne für einen gemeinsamen Zufallszugriff wird auch den Funkstationen innerhalb des Funkabdeckungsbereiches des Zugangspunktes von dem Zugangspunkt übermittelt.

Vorteilhafterweise handelt es sich bei den Informationen um die Länge der von allen Funkstationen des funkgestützten lokalen Netzes für einen Zufallszugriff auf Funkressourcen nutzbaren Zeitspanne und/oder um den Anfangszeitpunkt dieser Zeitspanne. Die bloße Mitteilung der Länge der Zeitspanne ist dann möglich, wenn der Anfangszeitpunkt von den entfernten Stationen auf andere Weise ermittelt werden kann. Die alleinige Mitteilung eines Anfangszeitpunktes ist in Verbindung mit einem Signal vorteilhaft, welches gegebenenfalls zu einem späteren Zeitpunkt das Ende der Zeitspanne anzeigt.

In einer Weiterbildung der Erfindung weist außerhalb der Zeitspanne ausschließlich der mindestens eine Zugangspunkt Funkressourcen an Funkstationen innerhalb seines Funkabdeckungsbereiches zu. Ein Zufallszugriff durch Funkstationen innerhalb des Funkabdeckungsbereiches des Zugangspunktes ist also außerhalb der Zeitpanne für den gemeinsamen Zufallzugriff nicht erlaubt. Die Funkressourcen werden zu diesen Zeiten ausschließlich zentral durch den Zugangspunkt verteilt. Auch den entfernten Funkstationen ist ein Zufallszugriff grundsätzlich verboten. Werden einer Funkstation jedoch Funkressourcen zugewiesen, so steht es dieser frei, ihren entfernten Funkstationen während der ihr zur Verfügung stehenden Zeitspanne Zufallszugriffe auf die Funkressourcen zu erlauben. Dieses Vorgehen vermeidet ungewollte Kollisionen der Zufallszugriffssignale von entfernten Funkstationen mit anderen Signalen außerhalb der von allen Funkstationen für einen Zufallszugriff nutzbaren Zeitspanne.

In einer Ausgestaltung der Erfindung befinden sich die Informationen in dem Duration-ID-Feld eines MAC-Rahmens. In diesem Fall können alle Funkstationen des funkgestützten lokalen Netzes die entsprechenden Bits des Duration-ID-Feld auslesen, um die benötigten Informationen über die Zeitspanne für den gemeinsamen Zufallszugriff zu erhalten.

Mit Vorteil kann es sich bei dem weiteren Signal um ein Leuchtfeuersignal oder um ein Signal zur Zuweisung von Funkressourcen oder um ein Signal, welches ein Zur-Verfügung-Stehen von Funkressourcen nach erfolgreichem Zufallszugriff indiziert, handeln.

Vorteilhafterweise wird das Signal oder auch das weitere Signal von der ersten Funkstation während einer Zeitspanne gesendet, in welcher der ersten Funkstation Funkressourcen von dem mindestens einen Zugangspunkt zugewiesen sind, oder in welcher der ersten Funkstation Funkressourcen nach erfolgreichem Zufallszugriff zur Verfügung stehen.

Einzelheiten und Details der Erfindung werden anhand eines Ausführungsbeispiels im folgenden erläutert. Dabei zeigen
- Figur 1:: einen Ausschnitt aus einem funkgestützten lokalen Netz,
- Figur 2:: eine beispielhafte Ressourcenverteilung,
- Figur 3:: eine beispielhafte Ressourcenverteilung bei Vorliegen von entfernten Quality of Service Stations,
- Figur 4:: ein erfindungsgemäßes Verfahren zur Ressourcenverteilung bei Vorliegen von entfernten Quality of Service Stations unter Verwendung von POLLDUMMY Nachrichten,
- Figur 5:: ein erfindungsgemäßes Verfahren zur Ressourcenverteilung bei Vorliegen von entfernten Quality of Service Stations unter Verwendung von RTSDUMMY Nachrichten,
- Figur 6:: ein erfindungsgemäßes Verfahren zur Ressourcenverteilung bei Vorliegen von entfernten Quality of Service Stations unter Verwendung von zusätzlichen Leuchtfeuersignalen,
- Figur 7:: eine erfindungsgemäße Verwendung von zusätzlichen Leuchtfeuersignalen,
- Figur 8:: ein erfindungsgemäßes Verfahren zur Ressourcenverteilung bei Vorliegen von entfernten Quality of Service Stations unter Verwendung einer gemeinsamen Wettbewerbsphase,
- Figur 9:: einen MAC Rahmen innerhalb des IEEE 802.11e Standards,
- Figur 10:: ein erfindungsgemäßes Duration ID Feld eines MAC Rahmens.

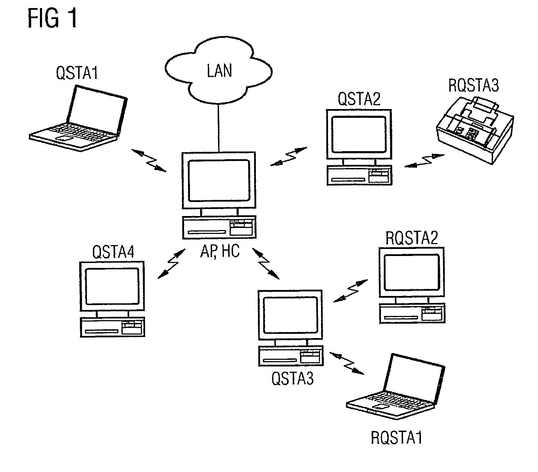

Das Ausführungsbeispiel bezieht sich auf ein funkgestütztes lokales Netz nach der Art des IEEE 802.11e Standards. Figur 1 zeigt einen Ausschnitt aus einem solchen Netz, bestehend aus dem Hybrid Coordinator HC, welcher mit der Funktionalität eines Zugangspunktes AP verbunden ist. Der Funkzugangspunkt AP ist mit dem lokalen Netz LAN verbunden. In dem Funkabdeckungsbereich des Hybrid Coordinators HC befinden sich vier Quality of Service Stations QSTA1, QSTA2, QSTA3 und QSTA4.

Beabsichtigt sowohl die Quality of Service Station QSTA3, als auch die Quality of Service Station QSTA4 Daten mit einer möglichst geringen Verzögerung und einer hohen Traffic Category zu senden, wird der Hybrid Coordinator HC eine Zuweisung von Funkressourcen an diese Funkstationen gemäß den jeweiligen Werten der Traffic Category durchführen.

Es ist möglich, dass der Hybrid Coordinator HC Zeitspannen definiert, während denen die Quality of Service Stations QSTA1, QSTA2, QSTA3 und QSTA4 im Wettbewerb untereinander Zufallszugriffe auf die Funkressourcen durchführen, um somit Funkressourcen zur Versendung von Informationen für sich zu gewinnen. Bei definierten Zeitspannen für die Wettbewerbsphasen kann eine Nachricht, welche das Ende der wettbewerbsfreien Phase anzeigt, durch den Zugangspunkt versendet werden. Eine zweite Möglichkeit als Alternative zu definierten Wettbewerbsphasen ist, dass der Zufallszugriff den Quality of Service Stations QSTA1, QSTA2, QSTA3 und QSTA4 immer dann erlaubt ist, wenn aktuell keine Funkressourcen von dem Hybrid Coordinator HC an eine der Quality of Service Stations QSTA1, QSTA2, QSTA3 und QSTA4 zugewiesen sind. In beiden Fällen betreiben die Quality of Service Stations QSTA1, QSTA2, QSTA3 und QSTA4 in den jeweiligen Wettbewerbsphasen Zufallszugriffe auf die Funkressourcen, um Daten mit niedrigen Werten der Traffic Category zu versenden.

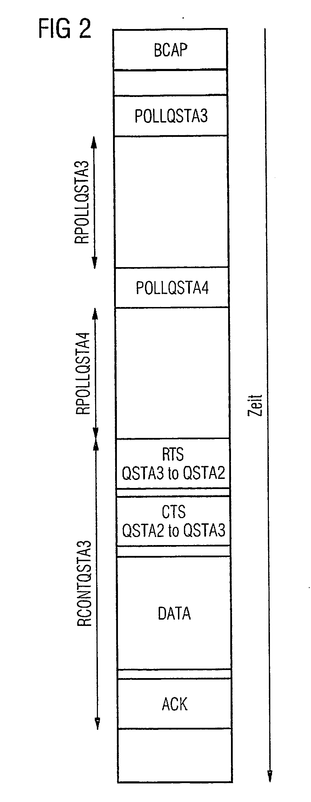

Figur 2 zeigt beispielhaft eine Verteilung von Funkressourcen. Nach rechts ist der Zeitablauf aufgetragen. Der Hybrid Coordinator HC bzw. der Zugangspunkt AP sendet anfangs ein Leuchtfeuersignal BCAP (BeaCon Access Point). Das Leuchtfeuersignal BCAP des Zugangspunktes AP dient u.a. der Zeitsynchronisierung, es enthält den zeitlichen Abstand bis zu dem nächsten Leuchtfeuersignal (nicht dargestellt), die Länge der Transmission Opportunity für den Zufallszugriff nach dem EDCF Verfahren und QoS Parameter. Weiterhin ermöglicht das Leuchtfeuersignal den Funkstationen, den geeigneten Zugangspunkt aufzufinden. Nach der Versendung des Leuchtfeuersignals weist der Hybrid Coordinator HC der Quality of Service Station QSTA 3 Funkressourcen mit einem Signal POLLQSTA3 zu. Dieses Signal POLLQSTA3 enthält Informationen darüber, welche Zeitdauer RPOLLQSTA3 die Quality of Service Station QSTA3 zur Versendung von Informationen verwenden darf. Im Anschluss an die Zeitdauer RPOLLQSTA3 weist der Hybrid Coordinator HC der Quality of Service Station QSTA4 Funkressourcen mit einem Signal POLLQSTA4 zu. Dieses Signal POLLQSTA4 enthält Informationen darüber, welche Zeitdauer RPOLLQSTA4 die Quality of Service Station QSTA4 zur Versendung von Informationen verwenden darf. Die beiden Zeitdauern RPOLLQSTA3 und RPOLLQSTA4 können gleich lange sein oder sich unterscheiden. Diese beiden Zeitdauern entsprechen jeweils einer Transmission Opportunity für die Zuweisung von Ressourcen.

Alle Funkstationen im Funkabdeckungsbereich des Zugangspunktes AP, d.h. die Quality of Service Stations QSTA1, QSTA2, QSTA3 und QSTA4, empfangen die Signale POLLQSTA3 und POLLQSTA4. Da die Signale POLLQSTA3 und POLLQSTA4 Informationen über die Zeitdauern RPOLLQSTA3 und RPOLLQSTA4 enthalten, ist den Funkstationen, welchen keine Ressourcen zugewiesen wurden, bekannt, für welche Zeitdauer ein Zufallszugriff verboten ist. Im Falle der Zuweisung von Ressourcen an die Quality of Service Station QSTA3 betrachten die Funkstationen die Funkressource für die Zeitdauer RPOLLQSTA3 als reserviert für die Quality of Service Station QSTA3 und versuchen daher während dieser Zeit nicht, Ressourcen per Zufallszugriff für sich zu gewinnen. Diese Reservierung von Funkressourcen erfolgt in den Funkstationen mittels dem Network Allocation Vektor (NAV), welchem nach dem Empfang des Signals POLLQSTA3 der Wert der reservierten Zeitdauer RPOLLQSTA3 zugewiesen wird. Die Vergabe von Funkressourcen über eine Zuweisung durch den Zugangspunkt einerseits und über den Zufallszugriff andererseits wechseln sich also ab.

Im Anschluss an die Zeitdauer RPOLLQSTA4 können die Quality of Service Stations QSTA1, QSTA2, QSTA3 und QSTA4 im Wettbewerb Zufallszugriff auf die Funkressourcen betreiben. In Figur 2 konnte sich die Quality of Service Station QSTA3 im Wettbewerb erfolgreich durchsetzen. Ihr stehen Funkressourcen für die Zeitdauer RCONTQSTA3 zur Verfügung. Sie schickt eine Ready to Send Nachricht RTS QSTA3 TO QSTA2 an die Quality of Service Station QSTA2, welche indiziert, dass sie bereit ist, Informationen für die Quality of Service Station QSTA2 zu versenden. Die Quality of Service Station QSTA2 antwortet mit einer Clear to Send Nachricht CTS QSTA2 TO QSTA3. Daraufhin sendet die Quality of Service Station QSTA3 die Informationen DATA, woraufhin die Quality of Service Station QSTA2 mit einer Empfangsbestätigung ACK antwortet. Die Zeitdauer RCONTQSTA3 entspricht der Transmission Opportunity, welche die Quality of Service Station QSTA3 im Wettbewerb für sich gewinnen konnte. Die Länge der Zeitdauer RCONTQSTA3 wurde den Quality of Service Stations QSTA1, QSTA2, QSTA3 und QSTA4 in dem von dem Hybrid Coordinator HC gesendeten Leuchtfeuersignal BCAP mitgeteilt.

Figur 1 zeigt neben den Quality of Service Stations QSTA1, QSTA2, QSTA3 und QSTA4 drei entfernte Quality of Service Stations RQSTA1, RQSTA2 und RQSTA3. Diese entfernten Quality of Service Stations RQSTA1, RQSTA2 und RQSTA3 befinden sich außerhalb des Funkabdeckungsbereiches des Zugangspunktes AP. Die entfernten Quality of Service Stations RQSTA1 und RQSTA2 befinden sich innerhalb des Funkabdeckungsbereiches der Quality of Service Station QSTA3, während sich die entfernte Quality of Service Station RQSTA3 aktuell im Funkabdeckungsbereich der Quality of Service Station QSTA2 aufhält. Der Funkabdeckungsbereich des funkgestützten lokalen Netzes soll nun dahingehend erweitert werden, dass die Quality of Service Stations QSTA2 und QSTA3 die Funkverbindung zwischen den jeweiligen entfernten Quality of Service Stations RQSTA1, RQSTA2 und RQSTA3 in ihrem Funkabdeckungsbereich und dem Zugangspunkt AP herstellen. Derartige Quality of Service Stations QSTA2 und QSTA3, welche Multi-Hop Informationsübertragung ermöglichen, werden auch Wireless Routers genannt.

Hierzu senden die beiden Quality of Service Stations QSTA2 und QSTA3 periodisch Leuchtfeuersignale zu den Quality of Service Stations RQSTA1, RQSTA2 und RQSTA3 in ihrem jeweiligen Funkabdeckungsbereich. Hierin wird den entfernten Quality of Service Stations RQSTA1, RQSTA2 und RQSTA3 die zur Verfügung stehende Transmission Opportunity für den Zufallszugriff mitgeteilt, so dass diese gemäß dem EDCF Verfahren im Wettbewerb Funkressourcen für sich gewinnen können.

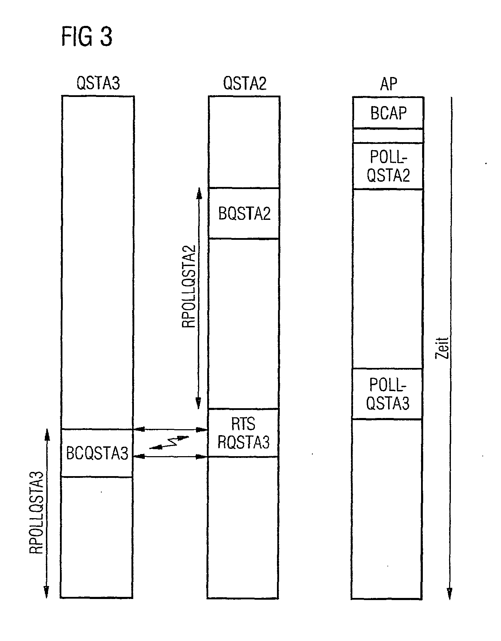

Figur 3 zeigt ein Beispiel für die Ressourcenverteilung beim Vorliegen von entfernten Quality of Service Stations RQSTA1, RQSTA2 und RQSTA3. Nach rechts ist die Zeit aufgetragen. Der obere Balken entspricht den im Zeitverlauf von dem Zugangspunkt AP gesendeten Signalen, der mittlere Balken den von der Quality of Service Station QSTA2 gesendeten Signalen, und der untere Balken stellt die von der Quality of Service Station QSTA3 gesendeten Signale dar. Anfangs sendet der Zugangspunkt AP ein Leuchtfeuersignal BCAP. Daraufhin weist der Zugangspunkt AP Ressourcen an die Quality of Service Station QSTA2 unter Verwendung des Signals POLLQSTA2 zu. Die folgende Zeitdauer RPOLLQSTA2 steht der Quality of Service Station QSTA2 zur Verfügung. Diese kann innerhalb der Zeitdauer RPOLLQSTA2 Informationen an den Zugangspunkt AP oder an Funkstationen senden. Weiterhin kann die Quality of Service Station QSTA2 innerhalb der Zeitdauer RPOLLQSTA2 Ressourcen an die entfernte Quality of Service Station RQSTA3 zuweisen oder die entfernte Quality of Service Station RQSTA3 einen Zufallszugriff durchführen lassen. Für die Wettbewerbsphasen für den Zufallszugriff von entfernten Quality of Service Stations gelten die entsprechenden Ausführungen bezüglich des Zufallszugriffs der Quality of Service Stations innerhalb des Funkabdeckungsbereichs des Zugangspunktes AP. Zu Beginn sendet die Quality of Service Station QSTA2 ein Leuchtfeuersignal BCQSTA2, in welchem der entfernten Quality of Service Station RQSTA3 innerhalb ihres Funkabdeckungsbereiches unter anderem die Länge der Transmission Opportunity für den Zufallszugriff mitgeteilt wird.

Nach dem Ablauf der Zeitdauer RPOLLQSTA2 weist der Zugangspunkt AP Ressourcen an die Quality of Service Station QSTA3 unter Verwendung des Signals POLLQSTA3 zu. Die folgende Zeitdauer RPOLLQSTA3 steht der Quality of Service Station QSTA3 zur Verfügung, welche die Zeitdauer RPOLLQSTA3 zur Versendung von Informationen nutzen kann. Weiterhin kann die Quality of Service Station QSTA3 während der Zeitdauer RPOLLQSTA3 Funkressourcen an die entfernten Quality of Service Stations RQSTA1 und RQSTA2 innerhalb ihres Funkabdeckungsbereichs zuweisen oder diese im Wettbewerb Zufallszugriffe auf die Funkressourcen durchführen lassen. Zu Beginn sendet auch die Quality of Service Station QSTA3 ein Leuchtfeuersignal BCQSTA3, in welchem den entfernten Quality of Service Stations RQSTA1 und RQSTA2 innerhalb ihres Funkabdeckungsbereiches unter anderem die Länge der Transmission Opportunity für den Zufallszugriff mitgeteilt wird.

Wenn für die entfernten Quality of Service Stations RQSTA1, RQSTA2 und RQSTA3 kein definierter Zeitraum für die Wettbewerbsphase festgelegt ist, können diese gemäß dem EDCF Verfahren Zufallszugriffe vornehmen, wenn sie feststellen, dass das Funkmedium nicht belegt ist. In der Figur 3 ist der Fall dargestellt, dass die entfernte Quality of Service Station RQSTA3 eine Ready to Send Nachricht RTS RQSTA3 im Zufallszugriff sendet. Wie in Figur 3 zu erkennen ist, kollidiert diese Ready to Send Nachricht RTS RQSTA3 der entfernten Quality of Service Station RQSTA3 zeitlich mit dem Leuchtfeuersignal BCQSTA3 der Quality of Service Station QSTA3. Eine derartige Kollision hat in der Regel zur Folge, dass keines der Signale unbeschädigt zu einem Empfänger gelangt. Derartige Kollisionen von Zufallszugriffssignalen von entfernten Quality of Service Stations mit Signalen von Quality of Service Stations, insbesondere mit den Leuchtfeuersignalen, stellen ein Hindernis für die Kommunikation innerhalb von funkgestützten lokalen Netzen mit entfernten Quality of Service Stations dar.

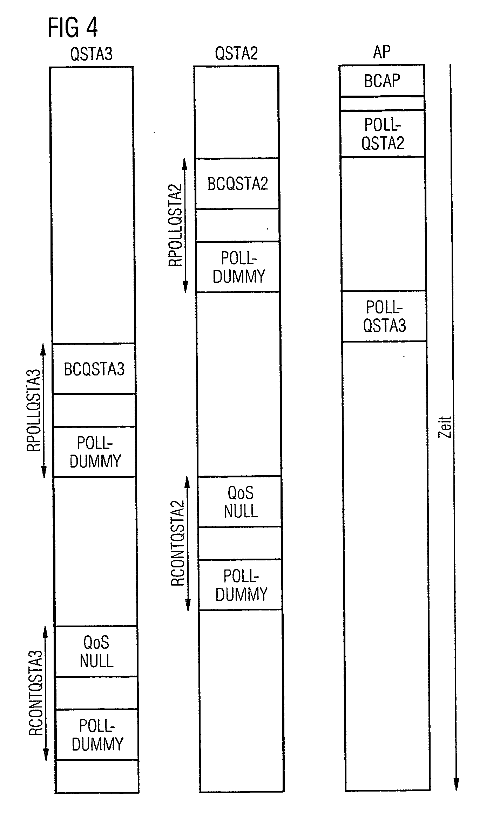

Figur 4 stellt eine erfindungsgemäße Möglichkeit dar, den entfernten Quality of Service Stations mitzuteilen, dass sie zukünftig keinen Zufallszugriff betreiben dürfen. Hierzu sendet die Quality of Service Station QSTA2 am Ende der Zeitdauer RPOLLQSTA2, welche ihr von dem Zugangspunkt AP mit dem Signal POLLQSTA2 zugewiesen wurde, ein Signal POLLDUMMY. Mit diesem Signal weist die Quality of Service Station QSTA2 Ressourcen an eine Funkstation zu, welche sich nicht in ihrem Funkabdeckungsbereich befindet. Es kann sich hierbei um eine Funkstation handeln, welche sich außerhalb des Funkabdeckungsbereich der Quality of Service Station QSTA2 aufhält, oder auch um eine Funkstation, welche innerhalb des funkgestützten lokalen Netzes nicht existiert. Eine weitere Möglichkeit ist die Zuweisung von Funkressourcen an sich selber. Jedes dieser Signale POLLDUMMY hat zur Folge, dass die entfernte Quality of Service Station RQSTA3 die Funkressource für eine in dem Signal POLLDUMMY gegebenenfalls enthaltene Zeitspanne für reserviert erachtet, und somit keinen Zufallszugriff ausübt. Die entfernte Quality of Service Station RQSTA3 setzt daher ihren Network Allocation Vector auf den Wert der ihr gegebenenfalls mit dem Signal POLLDUMMY mitgeteilten Zeitspanne.

Da die Leuchtfeuersignale innerhalb des IEEE 802.11e Standards in fixen Abständen gesendet werden müssen, kann die Quality of Service Station QSTA2 die Länge der Zeitspanne in dem Signal POLLDUMMY aus dem Zeitabstand vom Ende der Zeitdauer RPOLLQSTA2 bis zu dem nächsten von der Quality of Service Station QSTA2 zu sendenden Leuchtfeuersignal berechnen. Durch dieses Vorgehen wird sichergestellt, dass die entfernte Quality of Service Station RQSTA3 während der Zeitdauer RPOLLQSTA3, welche in Figur 4 der Quality of Service Station QSTA3 zugewiesen wird, keinen Zufallszugriff durchführt.

Die Signale BCQSTA3 und POLLDUMMY, welche von der Quality of Service Station QSTA3 versendet werden, entsprechen denen der Quality of Service Station QSTA2. Der Inhalt der jeweiligen Signale kann sich natürlich von dem der Signale der Quality of Service Station QSTA2 unterscheiden.

Die Quality of Service Station QSTA2 teilt der entfernten Quality of Service Station RQSTA3 durch ihr Leuchtfeuersignal BCQSTA2 die Länge der Transmission Opportunity für den Zufallszugriff mit. Hierbei ist zu beachten, dass diese Länge die Zeitdauer RPOLLQSTA2 abzüglich der Länge der Signale BCQSTA2 und POLLDUMMY und eventuell abzüglich bestimmter Schutzzeiten nicht überschreiten darf. Als Schutzzeit wird hierbei z.B. die PIFS (Point Coordination Function Inter-Frame Spacing) verwendet.

In Figur 4 ist der Fall dargestellt, dass die Quality of Service Station QSTA2 im Anschluss an die Zeitdauer RPOLLQSTA3 Funkressourcen per Zufallszugriff für sich gewinnen kann. Die entsprechende zur Verfügung stehende Zeitdauer RCONTQSTA2 ist dem Leuchtfeuersignal BCAP des Zugangspunktes AP zu entnehmen. Beabsichtigt die Quality of Service Station QSTA2, die im Wettbewerb gewonnene Ressource für das Senden von Informationen der entfernten Quality of Service Station RQSTA3 einzusetzen, so kann sie zu Beginn der Zeitdauer RCONTQSTA2 ein Signal QoSNULL senden. Dieses Signal indiziert der entfernten Quality of Service Station RQSTA3, dass die Funkressource nicht mehr belegt ist. Bei Verwendung des Network Allocation Vectors bewirkt das Signal QoSNULL ein Zurücksetzen des Network Allocation Vectors auf den Wert Null. Innerhalb der Zeitdauer RCONTQSTA2 kann die Quality of Service Station QSTA2 Ressourcen an die entfernte Quality of Service Station RQSTA3 zuweisen oder diese Zufallszugriffe betreiben lassen. Zum Abschluss der Zeitdauer RCONTQSTA2 sendet die Quality of Service Station QSTA2 erneut ein Signal POLLDUMMY, um die entfernte Quality of Service Station RQSTA3 davon abzuhalten, zukünftig einen Zufallszugriff zu betreiben. Der in dem Signal POLLDUMMY enthaltene Zeitraum, für den ein Zufallszugriff durch die entfernte Quality of Service Station RQSTA3 verboten wird, kann wieder über den zeitlichen Abstand bis zum nächsten von der Quality of Service Station QSTA2 zu sendenden Leuchtfeuersignal BCQSTA2 bestimmt werden.

Eine entsprechende Verwendung eines Signals QoSNULL ist auch in dem Fall möglich, dass die Quality of Service Station QSTA2 erneut eine Zuweisung von Ressourcen innerhalb der gleichen Leuchtfeuerperiode des Zugangspunktes AP erfährt.

In Figur 4 ist beispielhaft der Fall dargestellt, dass die Quality of Service Station QSTA3 im Anschluss an die Zeitdauer RCONTQSTA2 Ressourcen per Zufallszugriff für sich gewinnen kann. Für die von der Quality of Service Station QSTA3 gesendeten Signale QoSNULL und POLLDUMMY gelten die obigen Ausführungen entsprechend.

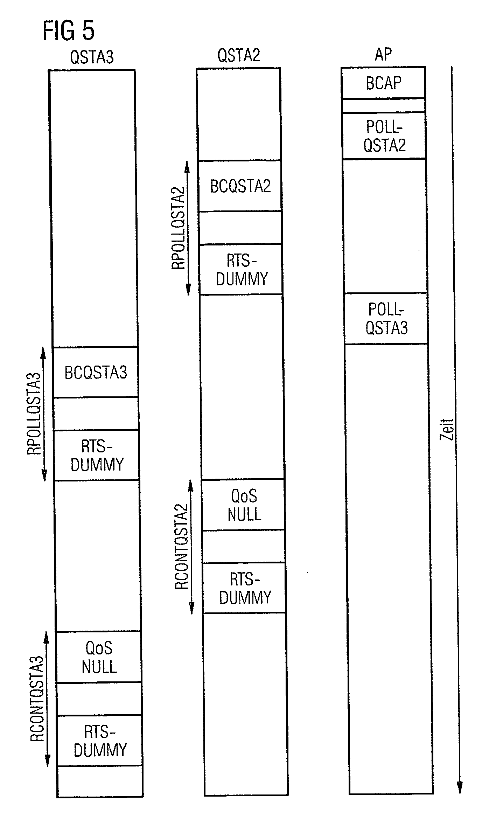

Alternativ zur Versendung eines Signals POLLDUMMY durch die Quality of Service Stations QSTA2 und QSTA3 können diese auch ein Signal RTSDUMMY an die entfernten Quality of Service Stations RQSTA1, RQSTA2 und RQSTA3 in ihrem jeweiligen Funkabdeckungsbereich senden. Diese Möglichkeit ist in Figur 5 dargestellt. Das Signal RTSDUMMY beinhaltet eine Ready to Send Nachricht an eine Funkstation, welche sich nicht innerhalb des Funkabdeckungsbereiches der jeweiligen Quality of Service Station QSTA2 oder QSTA3 befindet. Wie bei der Verwendung von POLLDUMMY Nachrichten beschrieben, kann es sich bei dem Adressaten der Ready to Send Nachricht RTSDUMMY um eine Funkstation handeln, welche sich außerhalb des Funkabdeckungsbereich der jeweiligen Quality of Service Station QSTA2 oder QSTA3 aufhält, oder auch um eine Funkstation, welche innerhalb des funkgestützten lokalen Netzes nicht existiert. Eine weitere Möglichkeit ist wiederum die Versendung der Ready to Send Nachricht RTSDUMMY an sich selbst. Im Fall der Versendung einer Ready to Send Nachricht RTSDUMMY erachten die entfernten Quality of Service Stations RQSTA1, RQSTA2 und RQSTA3 das Funkmedium als für den Zeitraum der Transmission Opportunity für Zufallszugriffe besetzt, der ihnen in dem Leuchtfeuersignal der jeweiligen Quality of Service Station QSTA2 oder QSTA3 mitgeteilt wurde.

Die Quality of Service Stations QSTA2 und QSTA3 können situationsabhängig entscheiden, ob zum Verbot eines zukünftigen Zufallszugriffs an die jeweiligen entfernten Quality of Ser vice Stations RQSTA1, RQSTA2 und RQSTA3 ein POLLDUMMY oder ein RTSDUMMY Signal verwendet werden soll.

Eine weitere Möglichkeit, die entfernten Quality of Service Stations RQSTA1, RQSTA2 und RQSTA3 davon abzuhalten, einen Zufallszugriff zu starten, besteht in einer Manipulation der Leuchtfeuersignale der jeweiligen Quality of Service Stations QSTA2 und QSTA3. Die Leuchtfeuersignale müssen gemäß dem IEEE 802.11e Standard in regelmäßigen Abständen vom Zugangspunkt AP gesendet werden, wobei die Periode der Leuchtfeuersignale den Quality of Service Stations bekannt ist. Der Abstand zwischen zwei Leuchtfeuersignalen, d.h. die Periode der Leuchtfeuersignale, beträgt typischerweise etwa 100 ms. Ebenso sollten die Leuchtfeuersignale der Quality of Service Stations, welche als Brücke für entfernte Quality of Service Stations fungieren, in regelmäßigen Abständen gesendet werden. Gegen diesen Grundsatz verstößt jedoch nicht das Aussenden eines zusätzlichen Leuchtfeuersignals (intermediate beacon) zwischen zwei Leuchtfeuersignalen. Diese zusätzlichen Leuchtfeuersignale können in beliebigen Abständen ausgesandt werden. In den Leuchtfeuersignalen wird den Quality of Service Stations bzw. den entfernten Quality of Service Stations die Transmission Opportunity als die Zeitdauer mitgeteilt, die ihnen bei erfolgreichem Zufallszugriff zur Kommunikation zur Verfügung steht. Die Länge der Transmission Opportunity ist damit ein fixer Wert bis zur Versendung des nächsten Leuchtfeuersignals, welches erneut den Wert der Transmission Opportunity für die folgende Periode des Leuchtfeuersignals mitteilt. Zusätzliche Leuchtfeuersignale erlauben es, den Wert der Transmission Opportunity auch innerhalb einer Leuchtfeuersignalperiode zu ändern.

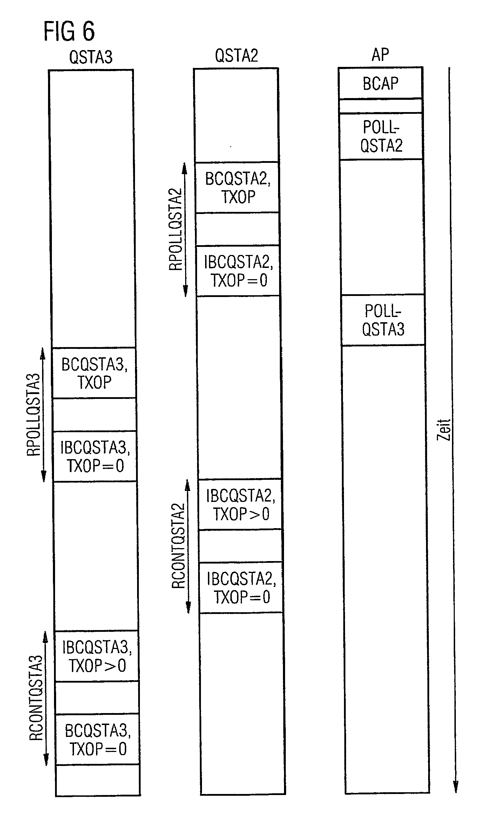

Figur 6 verdeutlicht ein beispielhaftes Vorgehen unter Verwendung von zusätzlichen Leuchtfeuersignalen. Nachdem der Quality of Service Station QSTA2 von dem Zugangspunkt AP mit dem Signal POLLQSTA2 Ressourcen für die Zeitdauer RPOLLQSTA2 zugewiesen wurden, sendet die Quality of Service Station QSTA2 ein Leuchtfeuersignal BCQSTA2,TXOP, welches die Transmission Opportunity für die entfernte Quality of Service Station RQSTA3 in ihrem Funkabdeckungsbereich festlegt. Zum Ende der Zeitdauer RPOLLQSTA2 sendet die Quality of Service Station QSTA2 ein zusätzliches Leuchtfeuersignal BCQSTA2,TXOP=0, welches der Transmission Opportunity den Wert Null zuordnet. Somit steht der entfernten Quality of Service Station RQSTA3 zukünftig keine Zeit für Zufallszugriffe zur Verfügung.

Der Wert der Transmission Opportunity, welcher der entfernten Quality of Service Station RQSTA3 mit dem Leuchtfeuersignal BCQSTA2,TXOP mitgeteilt wurde, sollte nicht länger als die Zeitdauer RPOLLQSTA2 abzüglich der Länge des Leuchtfeuersignals BCQSTA2,TXOP und der Länge des zusätzlichen Leuchtfeuersignals BCQSTA2, TXOP=0, sowie eventueller Schutzzeiten sein. Dies gilt für den Fall, dass die Quality of Service Station QSTA2 innerhalb der Zeitdauer RPOLLQSTA2 der entfernten Quality of Service Station RQSTA3 einen Zufallszugriff ermöglichen will. Im Regelfall stimmen die Längen der zusätzlichen Leuchtfeuersignale mit denen der Leuchtfeuersignale überein.

Das entsprechende Verfahren der Verwendung eines zusätzlichen Leuchtfeuersignals ist analog auf die Quality of Service Station QSTA3 innerhalb der ihr von dem Zugangspunkt AP mit dem Signal POLLQSTA3 zugewiesenen Zeitdauer RPOLLQSTA3 anzuwenden, wie in Figur 6 dargestellt.

In Figur 6 kann die Quality of Service Station QSTA2 nach Ablauf der Zeitdauer RPOLLQSTA3 Funkressourcen für die Zeitdauer RCONTQSTA2 im Zufallszugriff für sich gewinnen. Mit dem zusätzlichen Leuchtfeuersignal BCQSTA2, TXOP>0 teilt sie der entfernten Quality of Service Station RQSTA3 einen positiven, nicht verschwindenden Wert für die Transmission Opportunity mit. Somit ist der entfernten Quality of Service Station RQSTA3 zukünftig ein Zufallszugriff wieder möglich. Zum Ende der Zeitdauer RCONTQSTA2 sendet die Quality of Service Station QSTA2 wieder ein zusätzliches Leuchtfeuersignal BCQSTA2, TXOP=0, welches durch das Nullsetzen der Transmission Opportunity der entfernten Quality of Service Station RQSTA3 einen Zufallszugriff zukünftig unmöglich macht. Dies gilt bis zur nächsten Versendung eines eventuellen zusätzlichen Leuchtfeuersignals im Falle, dass der Quality of Service Station QSTA2 erneut Funkressourcen von dem Zugangspunkt AP zugewiesen werden oder im Falle, dass die Quality of Service Station QSTA2 erneut Funkressourcen im Wettbewerb für sich gewinnen kann. Wird kein weiteres zusätzliches Leuchtfeuersignal von der Quality of Service Station QSTA2 versandt, gilt die Nullsetzung der Transmission Opportunity bis zum nächsten Leuchtfeuersignal der Quality of Service Station QSTA2. Für die Berechnung der Länge der Transmission Opportunity, welche mit dem zusätzlichen Leuchtfeuersignal BCQSTA2,TXOP>0 mitgeteilt wird, gilt entsprechend die Ausführung bezüglich der Länge der Transmission Opportunity des Leuchtfeuersignals BCQSTA2,TXOP.

In Figur 6 kann die Quality of Service Station QSTA3 im Anschluss an die Zeitdauer RCONTQSTA2 Funkressourcen für die Zeitdauer RCONTQSTA3 per erfolgreichem Zufallszugriff für sich gewinnen. Die Quality of Service Station QSTA3 wendet das Verfahren bezüglich der zusätzlichen Leuchtfeuersignale BCQSTA3, TXOP>0 und BCQSTA3, TXOP=0 entsprechend den obigen Ausführungen an.

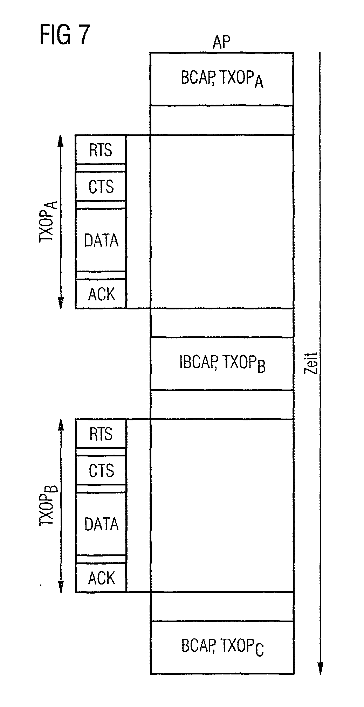

Zusätzliche Leuchtfeuersignale dienen auch der effektiven Verwaltung der Funkressourcen durch einen Zugangspunkt bzw. durch Funkstationen, welche die Funkverbindung zwischen entfernten Funkstationen und einem Zugangspunkt herstellen. Figur 7 verdeutlicht ein derartiges Vorgehen anhand der von dem Zugangspunkt AP gesendeten Signale. Zu Beginn sendet dieser ein Leuchtfeuersignal BCAP, TXOP_{A}, in welchem er den Quality of Service Stations in seinem Funkabdeckungsbereich einen Wert TXOP_{A} für die Transmission Opportunity des Zufallszugriffs mitteilt. Nachfolgend kommuniziert eine der Quality of Service Stations nach erfolgreichem Zufallszugriff mit ei ner anderen Quality of Service Station innerhalb des Funkabdeckungsbereichs des Zugangspunktes AP. Hierbei werden die Signale RTS, CTS, DATA und ACK unter Einhaltung der maximal zur Verfügung stehenden Zeitdauer von TXOP_{A} verwendet. Daraufhin versendet der Zugangspunkte AP ein zusätzliches Leuchtfeuersignal BCAP, TXOP_{A}, in welchem er den Quality of Service Stations in seinem Funkabdeckungsbereich einen neuen Wert TXOP_{B} für die Transmission Opportunity des Zufallszugriffs mitteilt. Eine Quality of Service Station, die im folgenden Funkressourcen für die Zeitdauer von TXOP_{B} im Zufallszugriff für sich gewinnen kann, kommuniziert über die Signale RTS, CTS, DATA und ACK unter Einhaltung der maximal zur Verfügung stehenden Zeitdauer von TXOP_{B}. Nach Beendigung der Leuchtfeuerperiode sendet der Zugangspunkt AP das nächste Leuchtfeuersignal BCAP, TXOP_{C}, in welchem er den Quality of Service Stations in seinem Funkabdeckungsbereich einen neuen Wert TXOP_{C} für die Transmission Opportunity des Zufallszugriffs für die folgende Leuchtfeuerperiode mitteilt.

Ein entsprechendes Vorgehen ist auch für die Funkstationen, welche die Funkverbindung zwischen entfernten Funkstationen und einem Zugangspunkt herstellen, möglich.

Die Transmission Opportunity für den Zufallszugriff kann somit flexibel gesteuert werden. Die Länge der vorgebbaren Transmission Opportunity kann den dynamisch sich verändernden Verkehrsbedingungen innerhalb des Funknetzes angepasst werden. So ist bei einer kleinen Anzahl von Quality of Service Stations in einem Funkabdeckungsbereich ein großer Wert für die Transmission Opportunity sinnvoll, um den Quality of Service Stations, welche im Wettbewerb Funkressourcen für sich gewinnen, zu erlauben, große Datenmengen zu senden. Bei vielen Quality of Service Stations in einem Funkabdeckungsbereich dagegen erschwert ein allzu großer Wert für die Transmission Opportunity den Zufallszugriff erheblich, so dass nur ein kleiner Wert für die Transmission Opportunity allen Quality of Service Stations eine realistische Chance auf Erfolg bei einem Zufallszugriff einräumt.

Befinden sich in einem funkgestützten lokalen Netz nach dem IEEE 802.11e Standard entfernte Quality of Service Stations, welche nur indirekt über andere Quality of Service Stations im Funkkontakt mit einem Zugangspunkt stehen können, so gibt es verschiedene Möglichkeiten, diese im ECDF Verfahren Zufallszugriffe auf die Funkressourcen vornehmen zu lassen. Eine erste Möglichkeit ist, den entfernten Quality of Service Stations Zufallszugriffe nur dann zu erlauben, wenn der jeweiligen Quality of Service Station, in deren Funkabdeckungsbereich sich die entfernten Quality of Service Stations befinden, Ressourcen zugewiesen wurden oder die Quality of Service Station Ressourcen durch einen Zufallszugriff für sich gewinnen konnte. Dies bedeutet, dass entfernte Quality of Service Stations nur dann einen Zufallszugriff vornehmen können, wenn die jeweilige Quality of Service Station das Funkmedium als nicht reserviert erachtet. Der Vorteil dieses Vorgehens besteht darin, dass entfernte Quality of Service Stations mit ihrem Zufallszugriff keine Funksignale anderer Funkstationen, wie z.B. Leuchtfeuersignale von Quality of Service Stations stören können. Als nachteilig erweist sich jedoch, dass die Funkressourcen in diesem Fall nicht optimal ausgenutzt werden. Betrachtet man die Konstellation der Quality of Service Stations und der entfernten Quality of Service Stations der Figur 1, so ist es möglich, dass ein Zufallszugriff der Quality of Service Station QSTA4 und der entfernten Quality of Service Station RQSTA3 gleichzeitig erfolgreich sein kann, da die beiden Funkstationen einen großen Abstand voneinander haben und ihre Funksignale sich somit nicht stören.

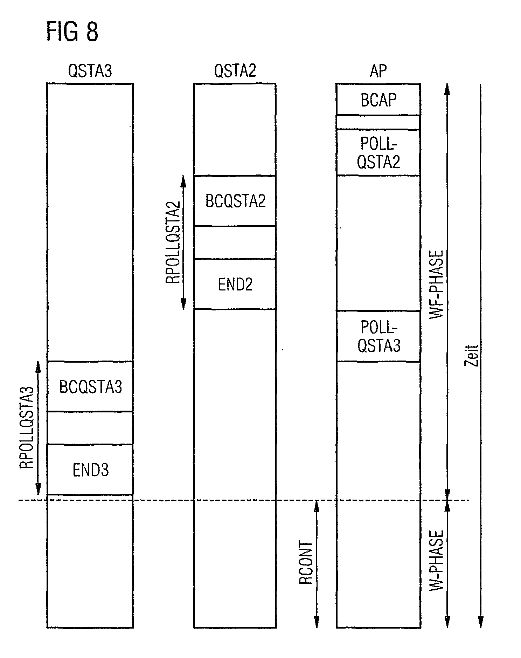

Erfindungsgemäß wird daher eine Zeitspanne eingeführt, während welcher alle Funkstationen des funkgestützten lokalen Netzes einen Zufallszugriff vornehmen dürfen, d.h. eine gemeinsame Wettbewerbsphase. Figur 8 zeigt eine derartige zeit liche Aufteilung in eine Wettbewerbsfreie Phase und eine gemeinsame Wettbewerbsphase. Zu Beginn sendet der Zugangspunkt AP ein Leuchtfeuersignal BCAP, welches den Quality of Service Stations QSTA1, QSTA2, QSTA3 und QSTA4 innerhalb seines Funkabdeckungsbereiches u.a. die Länge der Transmission Opportunity für Zufallszugriffe innerhalb der folgenden Leuchtfeuerperiode mitteilt. Daraufhin weist der Zugangspunkt AP der Quality of Service Station QSTA2 mit dem Signal POLLQSTA2 Funkressourcen der Zeitdauer RPOLLQSTA2 zu. Die Quality of Service Station QSTA2 sendet zu Beginn der Zeitdauer RPOLLQSTA2 ein Leuchtfeuersignal BCQSTA2, in welchem sie der entfernten Quality of Service Station RQSTA3 die Länge der Transmission Opportunity für Zufallszugriffe mitteilt. Während der Zeitdauer RPOLLQSTA2 kann die Quality of Service Station QSTA2 der entfernten Quality of Service Station RQSTA3 entweder Funkressourcen zuweisen oder diese per Zufallszugriff auf die Ressourcen zugreifen lassen. Zum Abschluss der Zeitdauer RPOLLQSTA2 sendet die Quality of Service Station QSTA2 ein Signal END2. Dieses Signal indiziert der entfernten Quality of Service Station RQSTA3 in ihrem Funkabdeckungsbereich, dass ein Zufallszugriff künftig nicht erlaubt ist. Dieses Signal END2 kann z.B. aus einer Zuweisung von Funkressourcen an eine andere Funkstation als die entfernte Quality of Service Station RQSTA3 bestehen, oder auch aus einem Signal, welches einen erfolgreichen Zufallszugriff einer anderen Station als der entfernten Quality of Service Station RQSTA3 indiziert. Weiterhin kann das Signal END2 aus einem zusätzlichen Leuchtfeuersignal der Quality of Service Station QSTA2 bestehen, welches die Transmission Opportunity für Zufallszugriffe auf den Wert Null setzt. In jedem der drei beschriebenen Fälle ist es der entfernten Quality of Service Station RQSTA3 nicht möglich, zukünftig - zumindest für eine bestimmte Zeitspanne - einen Zufallzugriff vorzunehmen. Die Versendung des Signals END2 der Quality of Service Station QSTA2 kann jedoch auch unterbleiben, in diesem Fall besteht jedoch die Gefahr, dass Zufallszugriffe der entfern ten Quality of Service Station RQSTA3 mit den Signalen anderer Funkstationen kollidieren.

Im Anschluss an die Zeitdauer RPOLLQSTA2 erfolgt eine Zuweisung von Funkressourcen durch den Zugangspunkt AP an die Quality of Service Station QSTA3 durch das Signal POLLQSTA3 für die Zeitdauer RPOLLQSTA3. Für die innerhalb der Zeitdauer RPOLLQSTA3 von der Quality of Service Station QSTA3 gesendeten Signale BCQSTA3 und END3 gelten die obigen Ausführungen bezüglich der Quality of Service Station QSTA2 entsprechend.

Die Zeitspanne der Zuweisungen von Funkressourcen an die Quality of Service Stations durch den Zugangspunkt AP stellt die wettbewerbsfreie Phase WF-PHASE dar. Innerhalb dieser wettbewerbsfreien Phase WF-PHASE ist den Quality of Service Stations QSTA1, QSTA2, QSTA3 und QSTA4 kein Zufallszugriff erlaubt. Den entfernten Quality of Service Stations RQSTA1, RQSTA2 und RQSTA3 dagegen ist ein Zufallszugriff dann erlaubt, wenn der jeweiligen Quality of Service Station QSTA2 oder QSTA3 Funkressourcen zugewiesen wurden und diese ihren entfernten Quality of Service Stations RQSTA1 und RQSTA2 oder RQSTA3 einen Zufallszugriff erlauben. Zum Ende der wettbewerbsfreien Phase WF-PHASE kann der Zugangspunkt eine Meldung senden, welche das Ende der wettbewerbsfreien Phase WF-PHASE anzeigt. Der wettbewerbsfreien Phase WF-PHASE schließt sich die Wettbewerbsphase W-PHASE der Länge RCONT an. Während der Wettbewerbsphase W-PHASE ist es allen Funkstationen erlaubt, Zufallszugriffe durchzuführen. Hierzu muss den Funkstationen mitgeteilt werden, wann die Wettbewerbsphase W-PHASE beginnt und wie lange sie andauert. Der Zugangspunkt AP kann diese Informationen den Quality of Service Stations QSTA1, QSTA2, QSTA3 und QSTA4 unter Verwendung eines von ihm gesendeten Signals, wie z.B. dem Leuchtfeuersignal BCAP oder der Signale POLLQSTA2, POLLQSTA3, mitteilen. Ebenso senden die jeweiligen Quality of Service Station QSTA2 bzw. QSTA3 diese Informatio nen z.B. über die Signale BCQSTA2 bzw. BCQSTA3 oder END2 bzw. END3 an die jeweiligen entfernten Quality of Service Stations RQSTA1 und RQSTA2 bzw. RQSTA3. Die Quality of Service Stations, welche die Informationen von ihre entfernten Quality of Service Stations übermitteln müssen, können diese Informationen direkt aus den Signalen des Zugangspunktes entnehmen.

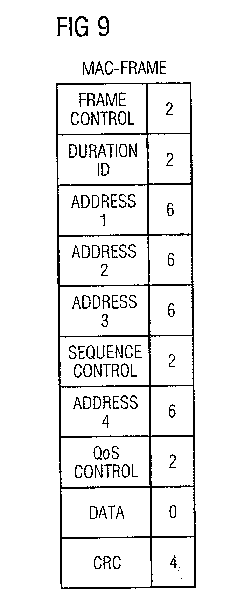

Figur 9 zeigt den Aufbau eines MAC Rahmens MAC-FRAME für den IEEE 802.11e Standard. Die Zahlen in der oberen Zeile stellen die Anzahl an Bit-Oktetts, d.h. Bytes, dar, welche für das jeweilige Feld in der unteren Zeile zur Verfügung stehen. Das erste Feld FRAME CONTROL wird für vielfältige Zwecke eingesetzt. So finden sich hier z.B. die Protokollversion, der Rahmentyp, Hinweise zur Fragmentierung, Verschlüsselungsinformation und Bits, welche die Bedeutung der vier Adressfelder festlegen. Im folgenden Feld DURATION ID findet sich z.B. Information über den virtuellen Reserviermechanismus mit Hilfe von RTS und CTS Nachrichten und über die Belegungsdauer des Funkmediums. Die vier Adressfelder ADDRESS 1, ADDRESS 2, ADDRESS 3 und ADDRESS 4 enthalten IEEE 802.11e MAC Adressen wie Sende-, Empfangs- und Netzadressen, wie sie auch von anderen IEEE 802.x Netzen bekannt sind. Die Interpretation der Adressen hängt von den Werten der Rahmensteuerung ab. Das Feld mit der Folgenummer SEQUENCE CONTROL wird eingesetzt, um Rahmen eindeutig identifizieren zu können. Das folgende Feld QoS CONTROL enthält die relevanten QoS Parameter. Das n Bytes lange Datenfeld DATA kann beliebige Daten enthalten, die von dem Sender zu dem oder den Empfängern transportiert werden. Den Schluss bildet das Feld CRC der Prüfsumme zum Schutz des Rahmens, wie sie auch in anderen 802.x Netzen eingesetzt wird.

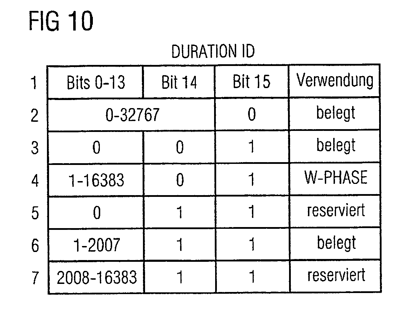

Figur 10 zeigt den Aufbau des DURATION ID Feldes. In der ersten Spalte sind die möglichen Bedeutungen der Bits 0 bis 13 gezeigt, in der zweiten bzw. dritten Spalte die Werte der Bits 14 bzw. 15. Der rechten Spalte ist die Verwendung der jeweiligen Bitkombinationen zu entnehmen. Die in den Zeilen 2, 3 und 6 dargestellten Bitkombinationen sind gemäß dem IEEE 802.11e Standard mit Informationen belegt, während die in den Zeilen 5 und 7 dargestellten Bitkombinationen reserviert sind. Die Bitkombinationen der vierten Zeile können eingesetzt werden, um die Lage und die Länge der Wettbewerbsphase W-PHASE anzuzeigen.

Somit können sowohl die Quality of Service Stations als auch die entfernten Quality of Service Stations einer entsprechenden Belegung des Feldes DURATION ID entnehmen, wann und wie lange eine gemeinsame Wettbewerbsphase für alle Funkstationen vorgesehen ist. Die gemeinsame Wettbewerbsphase für alle Funkstationen resultiert in einer effektiveren Nutzung der knappen Funkressourcen in dem Falle, dass entfernte Quality of Service Stations in einem funkgestützten lokalen Netz vorhanden sind.

## Patentansprüche

1. Verfahren zur Regelung von Zufallszugriffen in einem funkgestützten lokalen Netz,
umfassend mindestens einen Zugangspunkt (AP), eine erste Funkstation (QSTA2; QSTA3) innerhalb des Funkabdeckungsbereichs des mindestens einen Zugangspunktes (AP), mindestens eine entfernte Funkstation (RQSTA3; RQSTA1, RQSTA2) außerhalb des Funkabdeckungsbereichs des mindestens einen Zugangspunktes (AP) und gleichzeitig innerhalb des Funkabdeckungsbereichs der ersten Funkstation (QSTA2; QSTA3), sowie gegebenenfalls weitere Funkstationen (QSTA1, QSTA4) innerhalb des Funkabdeckungsbereichs des mindestens einen Zugangspunktes (AP),
wobei der mindestens eine Zugangspunkt (AP) zeitweilig an Funkstationen (QSTA1, QSTA2, QSTA3, QSTA4) innerhalb seines Funkabdeckungsbereichs Funkressourcen (RPOLLQSTA2, RPOLLQSTA3, RPOLLQSTA4) für die Versendung von Informationen zuweist,
und wobei Funkstationen (QSTA1, QSTA2, QSTA3, QSTA4, RQSTA1, RQSTA2, RQSTA3) zeitweilig einen Zufallszugriff auf Funkressourcen für die Versendung von Informationen betreiben,
**dadurch gekennzeichnet,**
**dass** die erste Funkstation (QSTA2; QSTA3) ein Signal an die mindestens eine entfernte Funkstation (RQSTA3; RQSTA1, RQSTA2) sendet, welches Informationen über die Zulässigkeit eines Zufallszugriffs der mindestens einen entfernten Funkstation (RQSTA3; RQSTA1, RQSTA2) beinhaltet, wobei der Zufallszugriff einen Zugriff auf Funkressourcen für die Versendung von Informationen ohne Zuweisung von Funkressourcen darstellt,
wobei das Signal (POLLDUMMY; RTSDUMMY; IBCQSTA2,TXOP=0, IBCQSTA3, TXOP=0; END2, END3) einen Zufallszugriff der mindestens einen entfernten Funkstation (RQSTA3; RQSTA1, RQSTA2) verbietet.

2. Verfahren nach Anspruch 1, **dadurch gekennzeichnet,**
**dass** das Signal einen Zufallszugriff der mindestens einen entfernten Funkstation (RQSTA3; RQSTA1, RQSTA2) für eine bestimmte Zeitspanne verbietet.

3. Verfahren nach einem der Ansprüche 1 bis 2, **dadurch gekennzeichnet,**
**dass** das Signal (POLLDUMMY) eine Zuweisung von Funkressourcen an eine andere als die mindestens eine entfernte Funkstation (RQSTA3; RQSTA1, RQSTA2), insbesondere an die erste Funkstation (QSTA2; QSTA3), beinhaltet.

4. Verfahren nach einem der Ansprüche 1 bis 2, **dadurch gekennzeichnet,**
**dass** das Signal (RTSDUMMY) ein Zur-Verfügung-Stehen von Funkressourcen für eine andere als die mindestens eine entfernte Funkstation (RQSTA3; RQSTA1, RQSTA2), insbesondere für die erste Funkstation (QSTA2; QSTA3), nach erfolgreichem Zufallszugriff indiziert.

5. Verfahren nach Anspruch 4, **dadurch gekennzeichnet,**
**dass** das Signal (RTSDUMMY) eine Versendung von Information an eine andere als die mindestens eine entfernte Funkstation (RQSTA3; RQSTA1, RQSTA2), insbesondere an die erste Funkstation (QSTA2; QSTA3), indiziert.

6. Verfahren nach einem der Ansprüche 1 bis 2, **dadurch gekennzeichnet,**
**dass** das Signal (IBCQSTA2, TXOP=0, IBCQSTA3,TXOP=0) eine Festsetzung der für einen Zufallszugriff maximal zu verwendenden Zeitspanne auf den Wert Null beinhaltet.

7. Verfahren nach Anspruch 6, **dadurch gekennzeichnet,**
**dass** es sich bei dem Signal um ein Leuchtfeuersignal (IBCQSTA2,TXOP=0, IBCQSTA3, TXOP=0) handelt.

8. Verfahren nach Anspruch 1, **dadurch gekennzeichnet,**
**dass** nach dem Signal (POLLDUMMY; RTSDUMMY;
IBCQSTA2, TXOP=0, IBCQSTA3, TXOP=0; END2, END3), welches einen Zufallszugriff der mindestens einen entfernten Funkstation (RQSTA3; RQSTA1, RQSTA2) verbietet, ein weiteres Signal (QoSNULL; IBCQSTA2, TXOP>0, IBCQSTA3, TXOP>0) von der ersten Funkstation (QSTA2; QSTA3) an die mindestens eine entfernte Funkstation (RQSTA3; RQSTA1, RQSTA2) gesendet wird, welches einen Zufallszugriff der mindestens einen entfernten Funkstation (RQSTA3; RQSTA1, RQSTA2) erlaubt.

9. Verfahren nach Anspruch 8, **dadurch gekennzeichnet,**
**dass** das weitere Signal (QoSNULL) die Beendigung einer Belegung von Funkressourcen indiziert.

10. Verfahren nach Anspruch 8, **dadurch gekennzeichnet,**
**dass** das weitere Signal (IBCQSTA2, TXOP>0, IBCQSTA3,TXOP>0) eine Festsetzung der für einen Zufallszugriff maximal zu verwendenden Zeitspanne auf einen Wert größer Null beinhaltet.

11. Verfahren nach Anspruch 10, **dadurch gekennzeichnet,**
**dass** der Wert der für einen Zufallszugriff maximal zu verwendenden Zeitspanne von der Anzahl von entfernten Funkstationen (RQSTA3; RQSTA1, RQSTA2) außerhalb des Funkabdeckungsbereichs des mindestens einen Zugangspunktes (AP) und gleichzeitig innerhalb des Funkabdeckungsbereichs der ersten Funkstation (QSTA2; QSTA3) abhängt.

12. Verfahren nach Anspruch 10 oder 11, **dadurch gekennzeichnet,**
**dass** es sich bei dem weiteren Signal um ein Leuchtfeuersignal (IBCQSTA2, TXOP>0, IBCQSTA3, TXOP>0) handelt.

13. Verfahren nach Anspruch 8, **dadurch gekennzeichnet,**
**dass** das weitere Signal Informationen über eine von allen Funkstationen (QSTA1, QSTA2, QSTA3, QSTA4, RQSTA1, RQSTA2, RQSTA3) des funkgestützten lokalen Netzes für einen Zufallszugriff auf Funkressourcen nutzbare Zeitspanne (W-PHASE) beinhaltet.

14. Verfahren nach Anspruch 13, **dadurch gekennzeichnet,**
**dass** es sich bei den Informationen um die Länge (RCONT) der von allen Funkstationen (QSTA1, QSTA2, QSTA3, QSTA4, RQSTA1, RQSTA2, RQSTA3) des funkgestützten lokalen Netzes für einen Zufallszugriff auf Funkressourcen nutzbaren Zeitspanne (W-PHASE) und/oder um den Anfangszeitpunkt dieser Zeitspanne (W-PHASE) handelt.

15. Verfahren nach Anspruch 13 oder 14, **dadurch gekennzeichnet,**
**dass** außerhalb der Zeitspanne (W-PHASE) ausschließlich der mindestens eine Zugangspunkt (AP) Funkressourcen (RPOLLQSTA2, RPOLLQSTA3) an Funkstationen (QSTA1, QSTA2, QSTA3, QSTA4) innerhalb seines Funkabdeckungsbereichs zuweist.

16. Verfahren nach einem der Ansprüche 13 bis 15, **dadurch gekennzeichnet,**
**dass** sich die Informationen in dem Duration-ID-Feld (DURATION ID) eines MAC-Rahmens (MAC-FRAME) befinden.

17. Verfahren nach einem der Ansprüche 13 bis 16, **dadurch gekennzeichnet,**
**dass** es sich bei dem Signal um ein Leuchtfeuersignal (BCQSTA2, BCQSTA3) oder um ein Signal (POLLDUMMY; END2, END3) zur Zuweisung von Funkressourcen oder um ein Signal (RTSDUMMY; END2, END3), welches ein Zur-Verfügung-Stehen von Funkressourcen nach erfolgreichem Zufallszugriff indiziert, handelt.

18. Verfahren nach einem der Ansprüche 1 bis 17, **dadurch gekennzeichnet,**
**dass** das Signal und/oder gegebenenfalls das weitere Signal von der ersten Funkstation (QSTA2; QSTA3) während einer Zeitspanne gesendet wird, in welcher der ersten Funkstation (QSTA2; QSTA3) Funkressourcen (RPOLLQSTA2; RPOLLQSTA3) von dem mindestens einen Zugangspunkt (AP) zugewiesen sind, oder in welcher der ersten Funkstation (QSTA2; QSTA3) Funkressourcen (RCONTQSTA2; RCONTQSTA3) nach erfolgreichem Zufallszugriff zur Verfügung stehen.

## Claims

1. Method for regulating random access operations in a radio-based local area network,
comprising at least one access point (AP), a first radio station (QSTA2; QSTA3) within the radio coverage area of the at least one access point (AP), at least one remote radio station (RQSTA3; RQSTA1, RQSTA2) outside the radio coverage area of the at least one access point (AP) and at the same time within the radio coverage area of the first radio station (QSTA2; QSTA3), and possibly further radio stations (QSTA1, QSTA4) within the radio coverage area of the at least one access point (AP),
wherein the at least one access point (AP) intermittently allocates radio resources (RPOLLQSTA2, RPOLLQSTA3, RPOLLQSTA4) for radio stations (QSTA1, QSTA2, QSTA3, QSTA4) within its radio coverage area for the purpose of sending information,
and wherein radio stations (QSTA1, QSTA2, QSTA3, QSTA4, RQSTA1, RQSTA2, RQSTA3) intermittently perform random access to radio resources for the purpose of sending information,
**characterized**
**in that** the first radio station (QSTA2; QSTA3) sends a signal to the at least one remote radio station (RQSTA3; RQSTA1, RQSTA2) which contains information about the admissibility of a random access operation by the at least one remote radio station (R QSTA3; RQSTA1, RQSTA2), wherein the random access operation is access to radio resources for the purpose of sending information without allocation of radio resources,
the signal (POLLDUMMY; RTSDUMMY; IBCQSTA2,TXOP=0, IBCQSTA3,TXOP=0; END2, END3) prohibiting a random access operation by the at least one remote radio station (RQSTA3; RQSTA1, RQSTA2).

2. Method according to Claim 1, **characterized**
**in that** the signal prohibits a random access operation by the at least one remote radio station (RQSTA3; RQSTA1, RQSTA2) for a particular period of time.

3. Method according to one of Claims 1 and 2, **characterized**
**in that** the signal (POLLDUMMY) contains an allocation of radio resources to a radio station other than the at least one remote radio station (RQSTA3; RQSTA1, RQSTA2), particularly to the first radio station (QSTA2; QSTA3).

4. Method according to one of Claims 1 and 2, **characterized**
**in that** the signal (RTSDUMMY) indicates an availability of radio resources for a radio station other than the at least one remote radio station (RQSTA3; RQSTA1, RQSTA2), particularly for the first radio station (QSTA2; QSTA3), following successful random access.

5. Method according to Claim 4, **characterized**
**in that** the signal (RTSDUMMY) indicates sending of information to a radio station other than the at least one remote radio station (RQSTA3; RQSTA1, RQSTA2), particularly to the first radio station (QSTA2; QSTA3).

6. Method according to one of Claims 1 and 2, **characterized**
**in that** the signal (IBCQSTA2,TXOP=0, IBCQSTA3,TXOP=0) contains a stipulation for the maximum period of time to be used for a random access operation as the value zero.

7. Method according to Claim 6, **characterized**
**in that** the signal is a beacon signal (IBCQSTA2,TXOP=0, IBCQSTA3,TXOP=0).

8. Method according to Claim 1, **characterized**
**in that** after the signal (POLLDUMMY; RTSDUMMY; IBCQSTA2,TXOP=0, IBCQSTA3,TXOP=0; END2, END3) which prevents a random access operation by the at least one remote radio station (RQSTA3; RQSTA1, RQSTA2) a further signal (QoSNULL; IBCQSTA2,TXOP>0, IBCQSTA3,TXOP>0) is sent from the first radio station (QSTA2; QSTA3) to the at least one remote radio station (RQSTA3; RQSTA1, RQSTA2), said further signal permitting a random access operation by the at least one remote radio station (RQSTA3; RQSTA1, RQSTA2).

9. Method according to Claim 8, **characterized**
**in that** the further signal (QoSNULL) indicates the termination of a use of radio resources.

10. Method according to Claim 8, **characterized**
**in that** the further signal (IBCQSTA2,TXOP>0, IBCQSTA3,TXOP>0) contains a stipulation for the maximum period of time to be used for a random access operation as a value greater than zero.

11. Method according to Claim 10, **characterized**
**in that** the value of the maximum period of time to be used for a random access operation is dependent on the number of remote radio stations (RQSTA3; RQSTA1, RQSTA2) outside the radio coverage area of the at least one access point (AP) and at the same time within the radio coverage area of the first radio station (QSTA2; QSTA3).

12. Method according to Claim 10 or 11, **characterized**
**in that** the further signal is a beacon signal (IBCQSTA2,TXOP>0, IBCQSTA3,TXOP>0).

13. Method according to Claim 8, **characterized**
**in that** the further signal contains information about a period of time (W-PHASE) which can be used by all radio stations (QSTA1, QSTA2, QSTA3, QSTA4, RQSTA1, RQSTA2, RQSTA3) in the radio-based local area network for a random access operation to radio resources.

14. Method according to Claim 13, **characterized**
**in that** the information is the length (RCONT) of the period of time (W-PHASE) which can be used by all radio stations (QSTA1, QSTA2, QSTA3, QSTA4, RQSTA1, RQSTA2, RQSTA3) in the radio-based local area network for a random access operation to radio resources and/or is the start time for this period of time (W-PHASE).

15. Method according to Claim 13 or 14, **characterized**
**in that** outside the period of time (W-PHASE) exclusively the at least one access point (AP) allocates radio resources (RPOLLQSTA2, RPOLLQSTA3) to radio stations (QSTA1, QSTA2, QSTA3, QSTA4) within its radio coverage area.

16. Method according to one of Claims 13 to 15, **characterized**
**in that** the information is in the duration-ID field (DURATION ID) of an MAC frame (MAC-FRAME).

17. Method according to one of Claims 13 to 16, **characterized**
**in that** the signal is a beacon signal (BCQSTA2, BCQSTA3) or is a signal (POLLDUMMY; END2, END3) for the allocation of radio resources or is a signal (RTSDUMMY; END2, END3) which indicates an availability of radio resources following successful random access.

18. Method according to one of Claims 1 to 17, **characterized**
**in that** the signal and/or possibly the further signal is sent by the first radio station (QSTA2; QSTA3) during a period of time in which the first radio station (QSTA2; QSTA3) has radio resources (RPOLLQSTA2; RPOLLQSTA3) allocated by the at least one access point (AP) or in which the first radio station (QSTA2; QSTA3) has radio resources (RCONTQSTA2; RCONTQSTA3) available following successful random access.

## Revendications

1. Procédé de régulation d'accès aléatoires dans un réseau local supporté radio,
comprenant au moins un point d'accès (AP), une première station radio (QSTA2 ; QSTA3) située à l'intérieur de la zone de couverture radio de l'au moins un point d'accès (AP), au moins une station radio distante (RQSTA3 ; RQSTA1 ; QRSTA2) située à l'extérieur de la zone de couverture radio de l'au moins un point d'accès (AP) et simultanément à l'intérieur de la zone de couverture radio de la première station radio (QSTA2 ; QSTA3), ainsi que, le cas échéant, des stations radio supplémentaires (QSTA1 ; QSTA4) situées à l'intérieur de la zone de couverture radio de l'au moins un point d'accès (AP),
l'au moins un point d'accès (AP) attribuant temporairement des ressources radio (RPOLLQSTA2, RPOLLQSTA3, RPOLLQSTA4) à des stations radio (QSTA1, QSTA2, QSTA3, QSTA4) situées à l'intérieur de sa zone de couverture radio pour l'émission d'informations,
et des stations radio (QSTA1, QSTA2, QSTA3, QSTA4, RQSTA1, RQSTA2, RQSTA3) exploitant temporairement un accès aléatoire à des ressources radio pour l'émission d'informations,
**caractérisé en ce**
**que** la première station radio (QSTA2 ; QSTA3) émet un signal à l'au moins une station radio distante (RQSTA3 ; RQSTA1 ; RQSTA2), lequel contient des informations sur l'admissibilité d'un accès aléatoire de l'au moins une station radio distante (RQSTA3 ; RQSTA1 ; RQSTA2), l'accès aléatoire représentant un accès à des ressources radio pour l'émission d'informations sans attribution de ressources radio,
le signal (POLLDUMMY ; RSTDUMMY ; IBCQSTA 2, TXOP=0, IBCQSTA3, TXOP=0 ; END2, END3) inhibant un accès aléatoire de l'au moins une station radio distante (RQSTA3 ; RQSTA1 ; RQSTA2).

2. Procédé selon la revendication 1, **caractérisé en ce**
**que** le signal inhibe un accès aléatoire de l'au moins une station radio distante (RQSTA3 ; RQSTA1 ; RQSTA2) pour une période de temps déterminée.

3. Procédé selon l'une quelconque des revendications 1 à 2,
**caractérisé en ce**
**que** le signal (POLLDUMMY) contient une attribution de ressources radio à une station radio distante autre que l'au moins une station radio distante (RQSTA3 ; RQSTA1 ; RQSTA2), notamment à la première station radio (QSTA2 ; QSTA3) .

4. Procédé selon l'une quelconque des revendications 1 à 2,
**caractérisé en ce**
**que** le signal (RSTDUMMY), après un accès aléatoire réussi, indique une disponibilité de ressources radio pour une station radio distante autre que l'au moins une station radio distante (RQSTA3 ; RQSTA1 ; RQSTA2), notamment pour la première station radio (QSTA2 ; QSTA3).

5. Procédé selon la revendication 4, **caractérisé en ce**
**que** le signal (RSTDUMMY) indique une émission d'informations à une station radio distante autre que l'au moins une station radio distante (RQSTA3 ; RQSTA1 ; RQSTA2), notamment à la première station radio (QSTA2 ; QSTA3).

6. Procédé selon l'une quelconque des revendications 1 à 2,
**caractérisé en ce**
**que** le signal (IBCQSTA 2, TXOP=0, IBCQSTA3, TXOP=0) contient une fixation à la valeur zéro de la période de temps à utiliser au maximum pour un accès aléatoire.

7. Procédé selon la revendication 6, **caractérisé en ce**
**que** le signal est un signal de phare (IBCQSTA 2, TXOP=0, IBCQSTA3, TXOP=0).

8. Procédé selon la revendication 1, **caractérisé en ce**
**qu'**après le signal (POLLDUMMY ; RSTDUMMY ; IBCQSTA 2, TXOP=0, IBCQSTA3, TXOP=0 ; END2, END3), lequel inhibe un accès aléatoire de l'au moins une station radio distante (RQSTA3 ; RQSTA1, RQSTA2), un signal supplémentaire (QoSNULL ; IBCQSTA2, TXOP>0, IBCQSTA3, TXOP>0) est émis par la première station radio (QSTA2 ; QSTA3) à l'au moins une radio station distante (RQSTA3 ; RQSTA1 ; RQSTA2), lequel autorise un accès aléatoire de l'au moins une station radio distante (RQSTA3 ; RQSTA1, RQSTA2).

9. Procédé selon la revendication 8, **caractérisé en ce**
**que** le signal supplémentaire (QoSNULL) indique l'achèvement d'une affectation de ressources radio.

10. Procédé selon la revendication 8, **caractérisé en ce**
**que** le signal supplémentaire (IBCQSTA2, TXOP>0, IBCQSTA3, TXOP>0) contient une fixation à une valeur supérieure à zéro de la période de temps à utiliser au maximum pour un accès aléatoire.

11. Procédé selon la revendication 10, **caractérisé en ce**
**que** la valeur de la période de temps à utiliser au maximum pour un accès aléatoire dépend du nombre de stations radio distantes (RQSTA3 ; RQSTA1 ; RQSTA2) situées à l'extérieur de la zone de couverture radio de l'au moins un point d'accès (AP) et simultanément à l'intérieur de la zone de couverture radio de la première station radio (QSTA2 ; QSTA3).

12. Procédé selon la revendication 10 ou 11, **caractérisé en ce**
**que** le signal supplémentaire est un signal de phare (IBCQSTA 2, TXOP>0, IBCQSTA3, TXOP>0).

13. Procédé selon la revendication 8, **caractérisé en ce**
**que** le signal supplémentaire contient des informations sur une période de temps (W-PHASE) exploitable par toutes les stations radio (QSTA1, QSTA2, QSTA3, QSTA4, RQSTA1, RQSTA2, RQSTA3) du réseau local supporté radio pour un accès aléatoire à des ressources radio.

14. Procédé selon la revendication 13, **caractérisé en ce**
**que** les informations représentent la longueur (RCONT) de la période de temps (W-PHASE) exploitable par toutes les stations radio (QSTA1, QSTA2, QSTA3, QSTA4, RQSTA1, RQSTA2, RQSTA3) du réseau local supporté radio pour un accès aléatoire à des ressources radio et/ou le moment du début de cette période de temps (W-PHASE).

15. Procédé selon la revendication 13 ou 14, **caractérisé en ce**
**qu'**en dehors de la période de temps (W-PHASE), uniquement l'au moins un point d'accès (AP) attribue des ressources radio (RPOLLQSTA2, RPOLLQSTA3) à des stations radio (QSTA1, QSTA2, QSTA3, QSTA4) situées à l'intérieur de sa zone de couverture radio.

16. Procédé selon l'une quelconque des revendications 13 à 15,
**caractérisé en ce**
**que** les informations se trouvent dans le champ de durée ID (DURATION ID) d'une trame MAC (MAC-FRAME).

17. Procédé selon l'une quelconque des revendications 13 à 16,
**caractérisé en ce**
**que** le signal est un signal de phare (BCQSTA2, BCQSTA3) ou un signal (POLLDUMMY ; END2, END3) destiné à attribuer des ressources radio ou un signal (RSTDUMMY ; END2, END3), lequel indique une disponibilité de ressources radio après un accès aléatoire réussi.

18. Procédé selon l'une quelconque des revendications 1 à 17,
**caractérisé en ce**
**que** le signal et/ou, le cas échéant, le signal supplémentaire sont émis par la première station radio (QSTA2 ; QSTA3) pendant une période de temps, pendant laquelle des ressources radio (RPOLLQSTA2 ; RPOLLQSTA3) sont attribuées à la première station radio (QSTA2 ; QSTA3) par l'au moins un point d'accès (AP), ou pendant laquelle des ressources radio (RCONTQSTA2 ; RCONTQSTA3) sont disponibles à la première station radio (QSTA2 ; QSTA3) après l'accès aléatoire réussi.
